# EUROPÄISCHE PATENTSCHRIFT

(11) **EP 0 763 074 B1**
(45) Veröffentlichungstag und Bekanntmachung des Hinweises auf die Patenterteilung: **05.11.1997**
(21) Anmeldenummer: 95920053.6
(22) Anmeldetag: 17.05.1995
(51) Int. Cl.: C09C 1/00, C09D 7/12, B41M 3/14, D21H 21/40

(54) **VERWENDUNG VON REDUZIERTEN INTERFERENZPIGMENTEN ZUR HERSTELLUNG VON FÄLSCHUNGSSICHEREN WERTSCHRIFTEN**
USE OF REDUCED INTERFERENCE PIGMENTS IN PRODUCING FORGERY-PROOF SECURITY DOCUMENTS
UTILISATION DE PIGMENTS D'INTERFERENCE REDUITS POUR PRODUIRE DES DOCUMENTS FIDUCIAIRES INFALSIFIABLES

(30) Priorität: 01.06.1994 DE 4419089
(43) Veröffentlichungstag der Anmeldung: 19.03.1997
(73) Patentinhaber: BASF AKTIENGESELLSCHAFT, 67056 Ludwigshafen (DE)
(72) Erfinder: SCHMID, Raimund, D-67435 Neustadt (DE); MRONGA, Norbert, D-69221 Dossenheim (DE); KALIBA, Claus, D-67105 Schifferstadt (DE); OSTERTAG, Werner, D-67269 Grünstadt (DE); SCHMIDT, Helmut, D-67574 Osthofen (DE)
(86) Internationale Anmeldenummer: EP9501871
(87) Internationale Veröffentlichungsnummer: WO9533009

(56) Entgegenhaltungen:
- EP-A- 0 332 071
- EP-A- 0 490 825
- EP-A- 0 493 231
- DE-A- 3 433 657
- DE-A- 4 241 753
- FR-A- 2 429 292
- NL-A- 8 901 256

## Beschreibung

Die vorliegende Erfindung betrifft die Verwendung von speziellen Interferenzpigmenten auf der Basis von mit Titandioxid beschichteten silikatischen Plättchen, die in einer reduzierenden Atmosphäre erhitzt worden sind, in Kombination mit streuenden Farbpigmenten oder mit streuenden Weißpigmenten zur Herstellung von fälschungssicheren Wertschriften und Verpackungen.

Die Herstellung von fälschungssicheren Wertschriften, z.B. von Papiergeld, Briefmarken, Schecks, Steuermarken, Scheckkarten, Bahn- oder Flugtickets, Kreditkarten, Telefonkarten, Lotterielosen, Aktien, Geschenk-Zertifikaten, Ausweisen oder Identifikationskarten, ist angesichts der Einführung immer leistungsfähigerer Farbkopierer und der damit zusammenhängenden Fälschungsmöglichkeiten von zunehmender Bedeutung. Das gleiche gilt für wertvolle Verpackungen.

Der Wunsch nach fälschungssicheren Wertschriften oder Verpackungen wurde in der Vergangenheit auf vielfältige Weise verfolgt. Beispielsweise wurden Magnetpigmente oder Fluoreszenzfarbstoffe zur Charakterisierung der Originale angewandt. Diese Kennzeichnungen haben aber den Nachteil, daß ihr Vorhandensein nicht unmittelbar visuell, sondern nur mit Hilfe entsprechender mehr oder weniger aufwendiger Leseapparate erkennbar ist. Das gleiche gilt für Kennzeichnungen mit IR- oder UV-Farbstoffen oder -Pigmenten.

Von größerem Interesse sind daher Kennzeichnungen, die ohne Hilfsmittel mit bloßem Auge ausreichend sicher erkennbar sind und leicht eine Unterscheidung des Originals von der Kopie ermöglichen. In der Praxis sind hier Wasserzeichen, silbern glänzende Metallstreifen, die in der Kopie aufgrund der Totalreflexion des Lichtes schwarz wiedergegeben werden, oder Hologramme angewendet worden. Der Nachteil dieser Kennzeichnungen ist aber, daß sie sich leicht imitieren lassen oder im Falle der Hologramme teuer und anfällig für Beschädigungen sind.

In der jüngsten Vergangenheit wurden darüber hinaus zur besonderen Kennzeichnung der Echtheit auch einfache Interferenzpigmente verwendet. Bei direkter Aufsicht sind die über hellem Untergrund applizierten Interferenzpigmente für den Betrachter aber praktisch nicht wahrnehmbar, er kann das exakte Feld der Kennzeichnung nur mit Schwierigkeiten ausmachen und übersieht die Kennzeichnung deshalb leicht.

Interferenzpigmente im herkömmlichen Sinn (beispielsweise in der US-A-3 087 827 beschrieben) sind plättchenförmige Glanzpigmente, die vorwiegend aus einem Glimmersubstrat bestehen, das mit einer Schicht aus hochbrechendem Material, z.B. Rutil, Zirkondioxid oder Zinndioxid, belegt ist, wobei die Schicht eine bestimmte Dicke aufweist (in der Regel >50 nm), so daß "Farben dünner Plättchen" entstehen. Interferenzpigmente müssen ausgerichtet appliziert werden. Die Intensität des Farbeindrucks von Interferenzfarbpigmenten ist, verglichen mit derjenigen von streuenden Farbpigmenten, jedoch gering. Sie zeigen ein winkelabhängiges Reflexionsmaximum. Derartige Interferenzpigmente werden seit vielen Jahren in der Kosmetik und im Kunststoffbereich angewandt.

Bekannt geworden sind außerdem Mehrschichtpigmente, die einen deutlichen, winkelabhängigen Farbwechsel zeigen und durch Pulverisierung von vom Substrat abgelösten dünnen Mehrschichtfilmen, sogenannter Thin Film Security Devices, hergestellt werden (US-A-4 434 010, US-A-5 059 245) . Das optische Prinzip solcher Pigmente beruht auf dem des Transmissionsfilters. Die Schichtenfolge der Pigmente umfaßt im typischen Fall 5 Schichten: eine niedrigbrechende dielektrische Schicht, z.B. Siliciumdioxid, eine semitransparente reflektierende Metallschicht, z.B. aus Titan, Aluminium oder Chrom, eine niedrigbrechende dielektrische Schicht, z.B. aus Siliciumdioxid, eine hochreflektierende opake Metallschicht, z.B. Aluminium oder Titan, eine niedrigbrechende dielektrische Schicht, z.B. Siliciumdioxid, eine semitransparente reflektierende Metallschicht, z.B. Aluminium, Chrom oder Titan, und eine niedrigbrechende dielektrische Schicht, z.B. Siliciumdioxid.

Derartige Pigmente haben jedoch den Nachteil, daß sie teuer und nicht in großen Mengen herstellbar sind sowie keine Alkalistabilität und meist nicht die gewünschte Säureechtheit aufweisen.

In der nicht vorveröffentlichten DE-A-42 41 753 werden Interferenzpigmente für fälschungssichere Wertschriften beschrieben, die mindestens eine farblose, hochbrechende Metalloxidschicht und eine nichtselektiv absorbierende Metall- und/oder Metalloxid- oder Kohlenstoffschicht, jedoch keine reduzierte Titandioxidbeschichtung aufweisen.

Der Erfindung lag die Aufgabe zugrunde, weitere Interferenzpigmente mit vorteilhaften Eigenschaften für das Anwendungsgebiet der fälschungssicheren Markierung von Wertschriften und Verpackungen bereitzustellen.

Demgemäß wurde die Verwendung von Interferenzpigmenten auf der Basis von mit Titandioxid beschichteten silikatischen Plättchen, die in einer reduzierenden Atmosphäre erhitzt worden sind, in Kombination mit streuenden Farbpigmenten oder mit streuenden Weißpigmenten zur Herstellung von fälschungssicheren, insbesondere schwer oder nicht kopierbaren, Wertschriften und Verpackungen gefunden.

Außerdem wurde eine bevorzugte Verwendung der Interferenzpigmente gefunden, welche dadurch gekennzeichnet ist, daß man sie in Kombination mit streuenden Farbpigmenten einsetzt, welche die Komplementärfarbe zur Reflexionsfarbe der Interferenzpigmente aufweisen.

Geeignete plättchenförmige, silikatische Substrate für die erfindungsgemäß zu verwendenden Interferenzpigmente sind insbesondere helle oder weiße Glimmer, wobei Schuppen von vorzugsweise naß vermahlenem Muskovit besonders bevorzugt sind. Selbstverständlich sind auch andere natürliche Glimmer, wie Phlogopit oder Biotit, künstliche Glimmer, Talk- und Glasschuppen geeignet.

Die Substratteilchen sind mit einer im wesentlichen aus Titandioxid bestehenden Schicht, die als untergeordnete Bestandteile (< 5 Gew.-%) weitere, vorzugsweise farblose, Metalloxide wie Zirkondioxid und Zinndioxid enthalten kann, belegt.

Derartige Pigmente sind allgemein bekannt und beispielsweise in den DE-A-14 67 468, DE-A-32 37 264 oder DE-A-20 09 566 beschrieben. Titandioxidbeschichtete Glimmerplättchen sind auch unter dem Namen Iriodin® (E. Merck, Darmstadt), Flonac® (Kemira Oy, Pori, Finnland) oder Mearlin® (Mearl Corporation, Ossining, New York) im Handel.

Die Dicke der TiO2-Schicht bestimmt den Farbton und beträgt je nach der gewünschten Interferenzfarbe in der Regel 20 bis 200 nm, vorzugsweise 40 bis 160 nm.

Die erfindungsgemäß zu verwendenden Interferenzpigmente werden durch Erhitzen der titandioxidbeschichteten Silikatplättchen in Gegenwart eines oder mehrerer reduzierenden Gase erhalten.

Als reduzierende Gase eignen sich insbesondere Wasserstoff und vor allem Ammoniak sowie auch Gemische dieser beiden Gase, die vorzugsweise mit Inertgas verdünnt sind.

Geeignete Temperaturen für diese reduzierende Behandlung sind in der Regel 500 bis 1000°C, bevorzugt 600 bis 800°C.

Je nach den Reaktionsbedingungen (Konzentration und Art des reduzierenden Gases, Temperatur, Dauer der Behandlung) werden eine Vielzahl von oxidischen und/oder nitridischen Titanverbindungen mit einer Oxidationszahl des Titans von < 4 erhalten, z.B. niedere Titanoxide, wie Ti₃O₅ und Ti₂O₃, bis zu TiO, Titanoxinitride und auch Titannitrid.

Derartige Interferenzpigmente und ihre Herstellung sind aus den JP-A-164 653/1983, 126 468/1984 und 184 570/1985 sowie vor allem der DE-A-34 33 657 und der EP-A-332 071 bekannt.

Erfindungsgemäß zu verwenden sind insbesondere solche Interferenzpigmente, bei denen die TiO2-Schicht nicht vollständig reduziert ist, Titandioxid also noch neben den genannten reduzierten Titanverbindungen vorliegt.

Besonders bevorzugt sind Pigmente, die, bezogen auf das noch enthaltene TiO₂, einen Gehalt an reduzierten Titanverbindungen von 0,1 bis 50 Gew.-%, vor allem 0,1 bis 10 Gew.-%, aufweisen, also nur "schwach" bzw. "besonders schwach" reduziert sind.

Mit zunehmendem Ausmaß der Reduktion verschiebt sich die Körperfarbe der Pigmente in Richtung der Absorptionsfarbe der Reduktionsprodukte des Titans, weshalb stärker reduzierte Pigmente insbesondere für den blauen bis violetten Farbtonbereich geeignet sind.

Mit schwächer reduzierten Pigmenten kann dagegen der gesamte Farbtonbereich abgedeckt werden. Es werden stark glänzende Pigmente mit pastelltonähnlicher Farbe erhalten, die beim Kopieren auffällige Fehlfarben ergeben.

Außerdem zeichnen sich die erfindungsgemäßen Pigmente durch ihre hohe Lichtechtheit aus.

Die erfindungsgemäß zu verwendenden Interferenzpigmente können noch eine Deckschicht aus farblosem oder selektiv absorbierendem Metalloxid aufweisen. Geeignete Metalloxide für diese Schicht sind z.B. Titan-, Zirkon-, Zinn-, Chrom-, Eisen-, Aluminium-, Silicium- oder Zinkoxid oder deren Mischungen. Mit dieser Schicht kann die Interferenzfarbe des Pigments weiter verändert werden und bei Anwendung farbiger Oxide auch die Körperfarbe zusätzlich modifiziert werden.

Bevorzugt kommen jedoch keine Deckschicht aufweisende Interferenzpigmente zur Anwendung.

Die erfindungsgemäß zu verwendenden Interferenzpigmente haben vorzugsweise eine mittlere Partikelgröße (bezogen auf den größten Partikeldurchmesser) von 5 bis 30 µm.

Sie werden in Kombination mit streuenden Farbpigmenten oder streuenden Weißpigmenten eingesetzt.

Unter streuenden Pigmenten werden pigmentäre Farbmittel verstanden, deren Wirkungsmechanismus hauptsächlich auf selektiver Absorption oder diffuser Streuung beruht. Als streuende Farbpigmente können dabei auch mit transparenten Farbmitteln überfärbte streuende Weißpigmente dienen.

Vorzugsweise weisen die zur Anwendung gelangenden streuenden Farbpigmente die Komplementärfarbe zur Reflexionsfarbe der Interferenzpigmente auf.

Geeignete streuende Farbpigmente sind sowohl anorganische wie auch organische Pigmente, die eine Brechzahl n, die größer als 1,65 ist, aufweisen.

Beispiele für anorganische Pigmente sind Eisenoxide, Bismutvanadat, farbige Spinelle oder Nickeltitangelb.

Beispiele für organische Pigmente sind Monoazopigmente (z.B. Produkte, die sich von Acetessigarylidderivaten oder von β-Naphtholderivaten ableiten), verlackte Monoazofarbstoffe, wie verlackte β-Hydroxynaphthoesäurefarbstoffe, Disazopigmente, kondensierte Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phthalocyaninpigmente und verlackte basische Farbstoffe, wie verlackte Triarylmethanfarbstoffe, sofern ihre Brechzahl n größer als 1,65 ist. Ansonsten sind diese Pigmente zur Überfärbung streuender Weißpigmente geeignet.

Als geeignetes streuendes Weißpigment ist insbesondere Titandioxid zu nennen.

Die erfindungsgemäße Verwendung der Interferenzpigmente hat für den visuell Wahrnehmenden folgende Vorteile: Das pigmentierte Markierungsfeld läßt sich unschwer unter jedem Winkel, auch über transparentem und hellem Untergrund, erkennen, da die reflektierte Interferenzfarbe durch die erfindungsgemäße Beschichtung wesentlich deutlicher und viel intensiver wahrgenommen werden kann. Außerdem entstehen beim Kopieren, selbst mit leistungsstarken Farbkopierern, Fehlfarben.

Kopiert man beispielsweise eine mit einem violetten Interferenzpigment und einem streuendem Weißpigment (z.B. Rutil) markierte Wertschrift, so wird das violett reflektierende Interferenzpigment über weißem streuendem Untergrund mit der Fehlfarbe Gelb wiedergegeben. Wird der Untergrund anstelle von Titandioxid mit Eisenrot, Kobaltspinell-Blau oder mit halogeniertem Phthalocyanin pigmentiert, so entstehen auf der Farbkopie bräunliche, grünliche oder gelbgrüne Fehlfarben. Das gleiche Ergebnis wird erzielt, wenn das streuende Weißpigment mit Farbstoffen, z.B. Papierfarbstoffen, rot, blau oder gelb überfärbt wird.

Besonders vorteilhaft ist die Kombination der erfindungsgemäßen Interferenzpigmente mit streuenden Farbpigmenten, welche die Komplementärfarbe zur Reflexionsfarbe der Interferenzpigmente aufweisen. Wird beispielsweise mit einem blauvioletten Interferenzpigment ein Muster auf einen mit gelb streuendem Pigment eingefärbten Untergrund aufgebracht, so verschwindet dieses auf der Farbkopie, da es mit grünlichgelber Fehlfarbe wiedergegeben wird.

Die genannten Effekte sind besonders auffallend, sichern also am besten vor Fälschung, wenn die Interferenzpigmente bei der Herstellung der Wertschriften ganz oben zu liegen kommen, d.h. wenn auf einem mit streuendem Farb- oder Weißpigment bedruckten Untergrund gedruckt wird, sind aber durchaus, wenn auch nicht so deutlich, feststellen, wenn Interferenzpigment und streuendes Farb- oder Weißpigment gemischt und dann zusammen verdruckt werden.

Die Applikation der erfindungsgemäßen Interferenzpigmente erfolgt zweckmäßigerweise über die Herstellung einer Druckfarbe und anschließendes Verdrucken mit Hilfe industrieüblicher Druckverfahren, z.B. mittels Siebdruck, Tiefdruck, Bronzierdruck, Flexodruck oder Offsetdruck.

Besonders vorteilhaft lassen sich die Pigmente auch in die Lacke einarbeiten, die zum Überlackieren von Drucken verwendet werden.

Schließlich sei als weitere vorteilhafte Anwendung auch die Einarbeitung in Kunststoffolien, die gewünschtenfalls auf Papier kaschiert werden, genannt.

### Beispiele

### Herstellung und Anwendung erfindungsgemäßer Interferenzpigmente

### Beispiel 1

In einem Quarz-Einhalsrundkolben, der über einen Motor drehbar war, in der Drehachse mit einer Gaszu- und -ableitung versehen war und zur Beheizung von einem zweischaligen Klappofen umschlossen war, wurden 15 g eines TiO₂-beschichteten Glimmerpigments mit violetter Interferenzfarbe (Iriodin® 219 Rutil Perllila; Merck) unter Überleiten von 15 l/h Stickstoff zunächst 2 h inertisiert und dann auf 700°C erhitzt. Anschließend wurden dem Inertgas 2 l/h Ammoniak zugemischt. Nach 2 h wurde die Ammoniakzufuhr beendet und die Heizung ausgeschaltet. Während des Abkühlens auf Raumtemperatur wurde weiter mit Stickstoff gespült.

Das so hergestellte Pigment war schwach violett gefärbt.

Zur Überführung in eine Siebdruckfarbe wurden 7,5 g des Pigments in 92,5 g einer handelsüblichen Bindemittellösung (Zusammensetzung: Copolymerisat auf der Basis von Vinylchlorid und Vinylisobutylether ≙ Laroflex® MP 45 /Acetat/Aliphaten) eingerührt.

Diese Farbe wurde anschließend mit einer handelsüblichen Siebdruckmaschine (Siebmaschenweite 112 µm) auf ein gestrichenes, gelbes, mit Bismutvanadat enthaltender Druckfarbe flächig bedrucktes Papier in einer Schichtdicke von 45 µm aufgebracht und an der Luft getrocknet.

Das aufgedruckte Merkmal war auch bei feinen Linien deutlich auf dem gelben Untergrund erkennbar.

In der Farbkopie verschwand das Merkmal, lediglich der gelbe Untergrund war zu sehen.

Wurde das Merkmal mit das unreduzierte Ausgangspigment enthaltender Druckfarbe auf das gelbe Papier gedruckt, so war es bereits im Original praktisch unsichtbar.

Außerdem wurde das Merkmal mit der erfindungsgemäßen Druckfarbe auf gestrichenes, weißes, TiO₂-beschichtetes Papier gedruckt. Das Merkmal erschien im Glanzwinkel in der violetten Reflexionsfarbe und außerhalb des Glanzwinkels in einem gelbstichigen Grauton.

In der Farbkopie wurde das Merkmal zitronengelb wiedergegeben.

### Beispiel 2

Analog Beispiel 1 wurden 15 g eines TiO₂-beschichteten Glimmerpigments mit blauer Interferenzfarbe (Iriodin 221 Rutil Feinblau; Merck) unter Überleiten von 10 l/h Stickstoff inertisiert und dann auf 700°C erhitzt. Die anschließende, ebenfalls zweistündige Reduktion wurde mit einem Gemisch aus 5 l/h Stickstoff und 5 l/h Ammoniak durchgeführt.

Das erhaltene Pigment war schwach blau gefärbt und wurde analog Beispiel 1 in eine Siebdruckfarbe überführt und verdruckt.

Auf gestrichenem, weißem, TiO₂-beschichtetem Papier erschien das Merkmal im Glanzwinkel in der blauen Reflexionsfarbe und außerhalb des Glanzwinkels in einem gelbstichigen Grauton.

In der Farbkopie wurde das Merkmal mit intensiv gelber Fehlfarbe wiedergegeben.

Wurde auf gelbes Papier gedruckt, so war das aufgedruckte Merkmal auch bei feinen Linien deutlich erkennbar, während es in der Farbkopie unsichtbar wurde.

## Patentansprüche

1. Verwendung von Interferenzpigmenten auf der Basis von mit Titandioxid beschichteten silikatischen Plättchen, die in einer reduzierenden Atmosphäre erhitzt worden sind, in Kombination mit streuenden Farbpigmenten oder mit streuenden Weißpigmenten zur Herstellung von fälschungssicheren Wertschriften und Verpackungen.

2. Verwendung nach Anspruch 1, dadurch gekennzeichnet, daß die mit Titandioxid beschichteten silikatischen Plättchen in Gegenwart von Ammoniak und/oder Wasserstoff erhitzt worden sind.

3. Verwendung nach Anspruch 1 oder 2, dadurch gekennzeichnet, daß die mit Titandioxid beschichteten silikatischen Plättchen auf 500 bis 1000°C erhitzt worden sind.

4. Verwendung nach den Ansprüchen 1 bis 3, dadurch gekennzeichnet, daß die streuenden Farbpigmente die Komplementärfarbe zur Reflexionsfarbe der Interferenzpigmente aufweisen.

## Claims

1. The use of interference pigments based on titanium dioxide-coated silicatic platelets which have been heated in a reducing atmosphere, in combination with scattering color pigments or with scattering white pigments, for preparing forgeryproof documents and packaging.

2. The use as claimed in claim 1 wherefor the titanium dioxide-coated silicatic platelets have been heated in the presence of ammonia and/or hydrogen.

3. The use as claimed in claim 1 or 3 wherefor the titanium dioxide-coated silicatic platelets have been heated to from 500 to 1000°C.

4. The use as claimed in any of the claims 1 to 3 wherefor the scattering color pigments are complementary in color to the reflection color of the interference pigments.

## Revendications

1. Utilisation de pigments d'interférence à base de plaquettes silicatées enduites de dioxyde de titane, qui ont été chauffées dans une atmosphère réductrice, en combinaison avec des pigments colorés dispersants ou avec des pigments blancs dispersants, pour la fabrication d'emballages et de papiers de valeur infalsifiables.

2. Utilisation selon la revendication 1, caractérisée en ce que les plaquettes silicatées enduites de dioxyde de titane ont été chauffées en présence d'ammoniac et/ou d'hydrogène.

3. Utilisation selon la revendication 1 ou 2, caractérisée en ce que les plaquettes silicatées enduites de dioxyde de titane ont été chauffées à 500-1000°C.

4. Utilisation selon l'une quelconque des revendications 1 à 3, caractérisée en ce que les pigments colorés dispersants présentent la couleur complémentaire de la couleur réfléchie du pigment d'interférence.
